(19) Europäisches Patentamt / European Patent Office / Office européen des brevets

(11) **EP 4 129 476 A1**

(12) **EUROPEAN PATENT APPLICATION**
published in accordance with Art. 153(4) EPC

(43) Date of publication:
**08.02.2023  Bulletin 2023/06**

(21) Application number: **21781258.5**

(22) Date of filing: **28.01.2021**

(51) International Patent Classification (IPC):
**B01J 33/00** *(1974.07)*        **B01J 23/46** *(1974.07)*
**C01B 7/04** *(1968.09)*

(52) Cooperative Patent Classification (CPC):
**B01J 23/46; B01J 33/00; C01B 7/04**

(86) International application number:
**PCT/JP2021/003004**

(87) International publication number:
**WO 2021/199634 (07.10.2021 Gazette 2021/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **01.04.2020   JP 2020066240**

(71) Applicant: SUMITOMO CHEMICAL COMPANY,
LIMITED
Tokyo 103-6020 (JP)

(72) Inventors:
• **MIKAMI, Yusuke**
  **Ichihara-shi, Chiba 299-0195 (JP)**
• **SEKI, Kohei**
  **Ichihara-shi, Chiba 299-0195 (JP)**

(74) Representative: **Vossius & Partner
Patentanwälte Rechtsanwälte mbB
Siebertstraße 3
81675 München (DE)**

(54)  **HALOGEN PRODUCTION CATALYST, PACKAGE AND METHOD FOR PRODUCING PACKAGE**

(57)  A catalyst for halogen production for oxidizing a hydrogen halide with oxygen to produce a halogen, the catalyst for halogen production including 4% or less by volume of water with respect to a pore volume of the catalyst for halogen production while the catalyst is encapsulated in a package, and the package encapsulating therein the catalyst for halogen production for oxidizing a hydrogen halide with oxygen to produce a halogen, wherein the catalyst for halogen production includes 4% or less by volume of water with respect to a pore volume of the catalyst for halogen production.

FIG.1

EP 4 129 476 A1

**Description**

**TECHNICAL FIELD**

This invention relates to a catalyst for halogen production, a package in which the catalyst for halogen production is encapsulated, and a method for producing the package.

**BACKGROUND ART**

Examples of methods for producing catalysts used for halogen production may include a catalyst production method for producing a supported ruthenium oxide catalyst in which a ruthenium oxide is supported on a titania carrier by bringing the titania carrier into contact for treatment with a solution containing a ruthenium compound and a solvent, drying the resulting product until a solvent content reaches a predetermined amount, keeping the solvent content in the predetermined amount, and then calcinating the resulting product under an oxidizing gas atmosphere (see Patent Literature 1). Moreover, an embodiment is known regarding storage of a catalyst used for methacrylic acid production in which a container having a predetermined moisture permeability is used for the storage in order to reduce changes in activity, selectivity, and the like caused by moisture absorption during the storage (see Patent Literature 2).

**RELATED ART DOCUMENTS**

Patent Literature

    Patent Literature 1: JP 2013-169516 A
    Patent Literature 2: JP 3797147 B

**DISCLOSURE OF INVENTION**

**PROBLEM TO BE SOLVED BY THE INVENTION**

Even when treated to remove a solvent by calcination as performed in the art of Patent Literature 1 mentioned above, a catalyst may absorb moisture (water) depending on subsequent packing method and packing condition, possibly suffering from loss of the original activity and selectivity thereof. Even when stored in a container, the catalyst may contain a large amount of water due to moisture absorption or the like, leading to water leakage out from the catalyst, causing corrosion at contacts between the catalyst and a metal container in particular, damaging the container, and thereby causing further loss of the activity and the selectivity of the catalyst.

**MEANS FOR SOLVING PROBLEM**

The inventors of the present invention have conducted diligent research to solve the above problem and found that the above problem can be solved by keeping the volume of water contained in a catalyst for halogen production within a predetermined range when the catalyst for halogen production is encapsulated in a package, and completed the present invention. That is, the present invention provides the following [1] to [7].

    [1] A catalyst for halogen production for oxidizing a hydrogen halide with oxygen to produce a halogen, the catalyst for halogen production comprising 4% or less by volume of water with respect to a pore volume of the catalyst for halogen production while the catalyst is encapsulated in a package.
    [2] The catalyst for halogen production according to above [1], wherein the catalyst for halogen production comprises a halogen at a concentration ranging from 0.01% by mass to 0.5% by mass with respect to a total mass of the catalyst for halogen production being 100% by mass.
    [3] The catalyst for halogen production according to above [1] or [2], wherein the catalyst for halogen production is a supported ruthenium oxide catalyst with ruthenium oxide supported on a carrier.
    [4] A package encapsulating therein a catalyst for halogen production for oxidizing a hydrogen halide with oxygen to produce a halogen, wherein the catalyst for halogen production comprises 4% or less by volume of water with respect to a pore volume of the catalyst for halogen production.
    [5] The package according to above [4], wherein the catalyst for halogen production comprises a halogen at a concentration ranging from 0.01% by mass to 0.5% by mass with respect to a total mass of the catalyst for halogen production being 100% by mass.

[6] The package according to above [4] or [5], wherein the catalyst for halogen production is a supported ruthenium oxide catalyst with ruthenium oxide supported on a carrier.

[7] A method for producing a package encapsulating therein a catalyst for halogen production comprising:

a step of preparing the catalyst for halogen production and an encapsulation container; and

a step of feeding an inert gas with a temperature of 50°C or less inside the encapsulation container and encapsulating the catalyst in the encapsulation container such that the catalyst for halogen production comprises 4% or less by volume of water with respect to a pore volume of the catalyst for halogen production to produce the package.

## EFFECT OF THE INVENTION

With the package and the method for producing the package, the catalyst for halogen production in the package can be prevented from absorbing moisture as well as leaking moisture out from the catalyst, efficiently preventing especially a metal container from being corroded, and thereby efficiently inhibiting reduction in activity and selectivity of the catalyst in the halogen production.

## BRIEF DESCRIPTION OF DRAWINGS

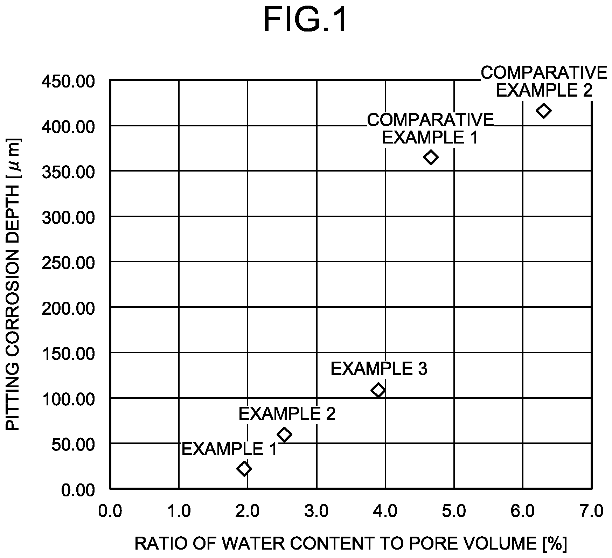

FIG. 1 is a graph representing relationship between pitting corrosion depth and ratio of water content to pore volume (%).

## DESCRIPTION OF EMBODIMENTS

Hereinafter, an embodiment of the present invention will specifically be described. The present invention is not limited by the following description.

A catalyst for halogen production according to the present embodiment is a catalyst for halogen production for oxidizing a hydrogen halide with oxygen to produce a halogen, the catalyst for halogen production comprising 4% or less by volume of water with respect to a pore volume of the catalyst for halogen production while the catalyst is encapsulated in a package.

1. Catalyst for halogen production and method for producing catalyst for halogen production

The catalyst for halogen production according to the present embodiment is a catalyst that is used to produce halogens from hydrogen halides. Specifically, the halogen production may include an embodiment in which chlorine is produced by oxidizing hydrogen chloride with oxygen in the presence of the catalyst for halogen production.

Examples of the embodiment of the catalyst for halogen production according to the present embodiment may include powder, a forming body obtained by forming into a predetermined shape (e.g., spherical particles, a cylindrical shape), and a supported form obtained by supporting on a carrier.

The catalyst for halogen production according to the present embodiment preferably refers to an embodiment of a supported ruthenium oxide catalyst with ruthenium oxide supported on the carrier.

Hereinafter, the catalyst for halogen production according to the present embodiment is specifically described with reference to the preferred supported ruthenium oxide catalyst as an example.

(1) Carrier

A titania carrier is preferred as the carrier applicable to the supported ruthenium oxide catalyst that is the catalyst for halogen production according to the present embodiment. Examples of titania suitably applicable as the carrier for the supported ruthenium oxide catalyst according to the present embodiment may include rutile-type titania (titania with rutile-type crystal structure), anatase-type titania (titania with anatase-type crystal structure), and amorphous titania. The titania applicable as the carrier for the supported ruthenium oxide catalyst of the present embodiment may be a mixture of these types of titania.

The carrier applied to the supported ruthenium oxide catalyst according to the present embodiment is preferably a titania carrier composed of the rutile-type titania and/or the anatase-type titania, among them, preferably a titania carrier having a ratio of the rutile-type titania with respect to the total of the rutile-type titania and the anatase-type titania in the titania carrier (referred to as a rutile-type titania ratio, hereinafter) of 50% or more, more preferably a titania carrier having a rutile-type titania ratio of 70% or more, and even more preferably a titania carrier having a rutile-type titania ratio of 90% or more. The higher the rutile-type titania ratio, the better the thermal stability tends to be, enabling to achieve better activity. The rutile-type titania ratio can be measured by X-ray diffraction method (hereinafter referred to as XRD method). The rutile-type titania ratio can be calculated by the formula represented by the following formula (1).

$$\text{Rutile-type titania ratio [\%]} = [I_R/(I_A+I_R)] \times 100 \quad (1)$$

In the formula (1), $I_R$ represents an intensity of diffraction ray from the rutile-type titania (110) plane, and $I_A$ represents an intensity of diffraction line from the anatase-type titania (101) plane.

In the supported ruthenium oxide catalyst according to the present embodiment, a sodium content in the titania carrier is preferably 200 ppm by weight or less, and a calcium content is preferably 200 ppm by weight or less. Moreover, a content of all alkali metal elements in the titania carrier is preferably 200 ppm by weight or less. In addition, a content of alkaline earth metal elements in the titania carrier is preferably 200 ppm by weight or less. The contents of alkali metal elements and alkaline earth metal elements can be measured by inductively coupled plasma atomic emission spectroscopy (hereinafter referred to as ICP analysis method), atomic absorption spectrometry, ion chromatography analysis method or the like, for example. The ICP analysis method is preferred for the measurement. In the supported ruthenium oxide catalyst according to the present embodiment, the titania carrier may contain an oxide such as alumina, zirconia, and niobium oxide.

In the supported ruthenium oxide catalyst according to the present embodiment, the specific surface area of the titania carrier can be measured by a nitrogen adsorption method (BET method). The specific surface area of the titania carrier is typically 5 to 300 $m^2/g$, and preferably 5 to 50 $m^2/g$.

The titania carrier in the supported ruthenium oxide catalyst according to the present embodiment may be a titania carrier with silica pre-supported on the titania.

(2) Method for producing supported ruthenium oxide catalyst

The catalyst for halogen production according to the present embodiment is preferably the supported ruthenium oxide catalyst as described above. Hereinafter, a specific description is given as to an example of the method for producing the supported ruthenium oxide catalyst in which ruthenium oxide is supported on the titania carrier mentioned above.

The ruthenium oxide can be supported on the titania carrier by bringing the titania carrier into contact for treatment with a solution containing a ruthenium compound and a solvent, then drying until the solvent content reaches 0.10 to 15% by weight with respect to a weight of the titania carrier, and then calcinating under an oxidizing gas atmosphere.

Examples of the ruthenium compound to be preferably used for producing the supported ruthenium oxide catalyst according to the present embodiment may include:
halogenated compounds of ruthenium such as $RuCl_3$ and $RuBr_3$; halogeno acid salts of ruthenium such as $K_3RuCl_6$ and $K_2RuCl_6$; oxoacid salts of ruthenium such as $K_2RuO_4$ and $Na_2RuO_4$; oxyhalogenated compounds of ruthenium such as $Ru_2OCl_4$, $Ru_2OCl_5$, and $Ru_2OCl_6$; halogeno complexes of ruthenium such as $K_2[RuCl_5(H_2O)_4]$, $[RuCl_2(H_2O)_4]Cl$, $K_2[Ru_2OCl_{10}]$, and $Cs_2[Ru_2OCl_4]$; ammine complexes of ruthenium such as $[Ru(NH_3)_3H_2O]Cl_2$, $[Ru(NH_3)_5Cl]Cl_2$, $[Ru(NH_3)_6]Cl_2$, $[Ru(NH_3)_6]Cl_3$ and $[Ru(NH_3)_6]Br_3$; carbonyl complexes of ruthenium such as $Ru(CO)_5$ and $Ru_3(CO)_{12}$; carboxylato complexes of ruthenium such as $[Ru_3O(OCOCH_3)_6(H_2O)_3]OCOCH_3$ and $[Ru_2(OCOR^1)_4]Cl$ ($R^1$ = alkyl group having 1 to 3 carbon atoms); nitrosyl complexes of ruthenium such as $K_2[RuCl_5(NO)]$, $[Ru(NH_3)_5(NO)]Cl_3$, $[Ru(OH)(NH_3)_4(NO)](NO_3)_2$, and $[Ru(NO)] (NO_3)_3$; phosphine complexes of ruthenium; amine complexes of ruthenium, and acetylacetonato complexes of ruthenium. Among them, as the ruthenium compound, the halogenated ruthenium that is the halogenated compound may preferably be used, and a chlorinated compound, that is, chlorinated ruthenium may particularly preferably be used. As well, as the ruthenium compound, a hydrate thereof may be used as required. Moreover, in the production of the supported ruthenium oxide catalyst according to the present embodiment, two or more types of the ruthenium compounds may be used.

In the production of the supported ruthenium oxide catalyst according to the present embodiment, a use ratio of the ruthenium compound to the titania carrier may be controlled as appropriate such that a weight ratio (ruthenium oxide/titania carrier) of the ruthenium oxide to the titania carrier in the supported ruthenium oxide catalyst obtained after calcinating described below is preferably 0.1/99.9 to 20.0/80.0, more preferably 0.3/99.7 to 10.0/90.0, and further preferably 0.5/99.5 to 5.0/95.0.

For use of the titania carrier with silica supported on titania as the carrier, the use ratio of the ruthenium compound to the titania carrier is preferably controlled such that the content of the ruthenium oxide reaches 0.10 to 20 moles with respect to one mole of silica supported on the titania carrier, and more preferably controlled such that the content of the ruthenium oxide reaches 0.20 to 10 moles.

The ruthenium compound is supported on the titania carrier by bringing the titania carrier into contact for treatment with the solution containing the ruthenium compound and the solvent. Examples of the solvent used in such a contact treatment may include water, alcohols, and nitriles. Two or more types of the solvents may be used as required. Water to be used as the solvent is preferably highly pure water such as distilled water, ion-exchanged water, and ultrapure water from the viewpoint of enhancement of catalyst activity.

Examples of the alcohol usable as the solvent may include alcohols having the carbon atom number of 1 to 6 such as methanol, ethanol, n-propanol, isopropanol, hexanol, and cyclohexanol.

Examples of the nitrile usable as the solvent may include nitriles having the carbon atom number of 1 to 6 such as acetonitrile, propionitrile, and benzonitrile.

The amount (volume) of the solvent in the solution is preferably 70% or more by volume, with respect to the remaining volume obtained by subtracting the volume of the supported ruthenium compound from the total pore volume of the titania carrier. The upper limit is not particularly limited, but preferably set to 120% or less by volume.

A temperature in the contact treatment is typically 0 to 100°C, and preferably 0 to 50°C. A pressure in the contact treatment is typically 0.1 to 1 MPa, and preferably atmospheric pressure.

The contact treatment can be performed under an air atmosphere or an atmosphere of an inert gas such as nitrogen gas, helium gas, argon gas, or carbon dioxide gas. The atmosphere may contain water vapor.

Examples of the contact treatment may include impregnation and soaking treatments. Specifically, examples of a method for bringing the titania carrier into contact for treatment with the solution containing the ruthenium compound and the solvent may include (i) a method for impregnating the titania carrier with the solution containing the ruthenium compound and the solvent, and (ii) a method for soaking the titania carrier in the solution containing the ruthenium compound and the solvent. The method (i) is preferred.

In the contact treatment, in the titania carrier containing the ruthenium compound and the solvent obtained as a result of the contact treatment, an amount of the used solvent with respect to that of the titania carrier can be controlled such that the solvent content exceeds 15% by weight in terms of the weight of the titania carrier.

The contact treatment of the titania carrier with the solution containing the ruthenium compound and the solvent is followed by a drying step of drying the resulting titania carrier containing the ruthenium compound and the solvent until the solvent content reaches 0.10 to 15% by weight in terms of the weight of the titania carrier.

The drying step is carried out preferably at a temperature of from 10°C to 100°C, preferably under a pressure of from 0.01 to 1 MPa, and more preferably under atmospheric pressure. A time for the drying can be controlled depending on the solvent content as appropriate.

The drying step can be implemented under an air atmosphere or an atmosphere of an inert gas such as nitrogen gas, helium gas, argon gas, or carbon dioxide gas. The atmosphere may contain water vapor. Moreover, the drying step can be performed while feeding air, inert gas, or a mixture of air and inert gas. The fed gas may contain water vapor.

When the drying step is performed under the flow of the gas containing water vapor, the concentration of water vapor (water) in the gas containing water vapor may be set within a range less than the saturated water vapor content under the drying condition.

When the drying is performed under the gas flow at the drying step, the gas flow rate is preferably 10 to 10000/h, and more preferably 100 to 5000/h, under a standard state (0°C, 0.1 MPa equivalent), as gas hourly space velocity (GHSV) in the titania carrier. The space velocity can be determined by dividing a volume per hour (L/h) of the gas passing through the device used at the drying step by the volume (L) of the titania carrier in the device used at the drying step.

The drying rate at the drying step can be set as appropriate. For example, from the viewpoint of productivity, the evaporation rate of the solvent per gram of the titania carrier is preferably 0.01 g/h or more, more preferably 0.02 g/h or more, and further preferably 0.03 g/h or more.

The upper limit of the drying rate can be set as appropriate. The upper limit of the drying rate is preferably 0.50 g/h or less as the evaporation rate of the solvent per gram of the titania carrier.

The drying rate can be adjusted by controlling conditions such as temperature, pressure, time, and gas flow rate. The drying rate may be varied at the drying step by changing the above conditions as appropriate.

The solvent content in the dried product obtained after the drying step is 0.10 to 15% by weight, preferably 1.0 to 13% by weight, and more preferably 2.0 to 7.0% by weight in terms of the weight of the titania carrier. The solvent content in the dried product in terms of the weight of the titania carrier, can be calculated using calculation formula represented by the following formula (2).

$$\text{Solvent content (\% by weight) in terms of weight}$$
$$\text{of titania carrier in dried product} = \text{[amount (g) of}$$
$$\text{residual solvent in dried product]/[Content (g) of titania}$$
$$\text{carrier in dried product]} \times 100 \quad (2)$$

When the impregnation is employed for bringing the titania carrier into contact for treatment with the solution containing the ruthenium compound and the solvent, the amount of residual solvent in the dried product can be determined by subtracting the weight change before and after the drying from the amount of the solvent used in the contact treatment.

The drying step is performed preferably while the solution is stirred. The drying while stirring refers to drying while the solution containing the ruthenium compound and the solvent and/or the titania carrier is/are in motion rather than at rest.

Examples of a stirring method may include a method for rotating a drying vessel itself used at the drying step, a method for vibrating the drying vessel itself, and a method for stirring with an agitator provided in the drying vessel.

The dried product obtained by the drying step is preferably held to contain 1.0 to 15% by weight of the solvent in terms of the weight of the titania carrier.

The holding is performed while the solvent contained in the dried product is inhibited from evaporating. The evaporation rate of the solvent is preferably less than 0.01 g/h per gram of the titania carrier, and more preferably 0.001 g/h or less.

A temperature for the holding is preferably 0 to 80°C, and more preferably 5 to 50°C.

A time for such holding can be set as appropriate by taking into account the solvent content and the holding temperature. The time for the holding is preferably 10 hours or more, and more preferably 15 hours or more.

The holding may be performed under a hermetically closed condition, an opened condition, or a gas flow, as long as the titania carrier is held to contain 1.0 to 15% by weight of solvent in terms of the weight of the titania carrier. The holding may be performed in the same equipment used for the drying treatment, or performed after transfer of it into another container subsequent to the drying treatment.

When the solvent content in terms of the weight of the titania carrier reaches 0.10% or more and less than 1.0% by weight at the drying step, the holding is performed after gas containing vaporized solvent is fed so as to come into contact with the dried product. When the solvent is water, the holding is performed after the product is left to stand in the atmosphere such that the solvent content in the dried product reaches within the range of 1.0 to 15% by weight in terms of the weight of the titania carrier.

After the above holding, the calcination step is carried out in an atmosphere of an oxidizing gas. The calcination step converts the ruthenium compound (ruthenium halide) supported on the titania carrier into ruthenium oxide to produce the supported ruthenium oxide catalyst in which ruthenium oxide is supported on the titania carrier.

Here, the oxidizing gas refers to gas containing an oxidizing substance, and may be oxygen-containing gas, for example. An oxygen concentration in the oxygen-containing gas is typically 1 to 30% by volume.

Air or pure oxygen can be used as an oxygen source of the oxygen-containing gas. The oxygen source can be diluted with inert gas or water vapor as required before use. Air is preferred as the oxidizing gas.

The calcination temperature at the calcination step is typically 100 to 500°C, and preferably 200 to 400°C.

The calcination step may be performed after the dried product is further dried until the solvent content in the dried product is less than 1.0% by weight in terms of the weight of the titania carrier subsequent to the holding, after a reduction treatment is performed subsequent to the holding, or after the dried product is further dried until the solvent content in the dried product is less than 1.0% by weight in terms of the weight of the titania carrier subsequent to the holding and then subjected to the reduction treatment.

A well-known conventional drying method can be employed as the drying method. The temperature in the drying method is typically from room temperature (25°C) to approximately 100°C. The pressure is typically from 0.001 to 1 MPa, and preferably atmospheric pressure. Such drying can be performed under an air atmosphere or an atmosphere of an inert gas such as nitrogen gas, helium gas, argon gas, or carbon dioxide gas. The atmosphere may further contain water vapor.

In the supported ruthenium oxide catalyst obtained by the calcination step, an oxidation number of ruthenium in the ruthenium oxide supported on the titania carrier is typically +4, and the ruthenium oxide is typically ruthenium dioxide ($RuO_2$). However, ruthenium oxide may contain ruthenium with a different oxidation number or another form of ruthenium oxide.

If the supported ruthenium oxide obtained is a ruthenium oxide supported on the titania carrier with silica supported on titania, the silica content in the supported ruthenium oxide differs depending on the physical properties of the titania used and the ruthenium oxide content in the supported ruthenium oxide obtained. The silica content is preferably 0.01 to 10% by weight, more preferably 0.1 to 5% by weight.

The supported ruthenium oxide catalyst obtained by the calcination step is preferably formed into forming body. Examples of shapes of the forming body of the supported ruthenium oxide catalyst may include spherical granular, cylindrical, pellet, extruded, ring, and honeycomb shapes, and a granular shape of appropriate size obtained by pulverizing and classifying after forming. Among them, the pellet shape is preferred. In this case, the forming body preferably has a diameter of 5 mm or less. Here, the lower limit of the diameter of the forming body is not particularly limited. The lower limit of the diameter of the forming body is preferably 0.5 mm or more.

The diameter of the forming body mentioned herein refers to a diameter of sphere for the spherical granular shape, a diameter of circular cross-section for the cylindrical shape, or a maximum diameter of cross-section for other shapes.

A step of forming the supported ruthenium oxide catalyst into the forming body may be performed beforehand during the preparation of the titania carrier, or performed after the ruthenium compound or ruthenium oxide is supported on the titania carrier. The forming step is preferably performed during the preparation of the titania carrier.

For use of the titania carrier with silica supported on titania, the forming step during the titania carrier preparation may be carried out before or after silica is supported. The forming step is preferably performed before silica is supported. The forming step during the titania carrier preparation can be performed by any preferred well-known conventional method such as a method of kneading powder or sol titania, for example, forming and then thermally treating the titania to form the titania carrier into the forming body with a predetermined shape.

Specifically, the forming body of the titania carrier can be prepared, for example, by kneading titania powder or titania sol together with water and a forming additive such as an organic binder, extruding it into a noodle shape, drying it, and pulverizing it into a predetermined shape, and then thermally treating it in the atmosphere of the oxidizing gas such as air.

The oxidizing gas can be the oxygen-containing gas, for example. The oxygen concentration of the oxygen-containing gas is typically approximately 1 to 30% by volume. Air or pure oxygen is typically used as the oxygen source of the oxygen-containing gas. The oxygen source can be diluted with the inert gas or water vapor as required. Among them, air is preferred as the oxidizing gas. Examples of the inert gas may include nitrogen gas, helium gas, argon gas, and carbon dioxide gas. The inert gas can be diluted with water vapor as required. The nitrogen gas and the carbon dioxide gas are particularly preferred as the inert gases. In this case, the treatment temperature is typically 400 to 900°C, and preferably 500 to 800°C.

The pore volume of the forming body of the supported ruthenium oxide catalyst is preferably 0.15 to 0.40 mL/g, and more preferably 0.15 to 0.30 mL/g. The pore volume of the forming body can be adjusted by controlling compositions of raw materials used at the above forming step or by controlling a temperature for the heat treatment of the forming body.

The pore volume of the supported ruthenium oxide catalysts can be measured by a mercury injection method, for example. Specifically, the pore volume (mL/g) can be determined as a mercury intrusion amount per gram of the supported ruthenium oxide catalyst (forming body) that is calculated by dividing a total mercury intrusion amount (mL) by the sample weight (g) after the mercury intrusion amount is measured with use of a pore volume measurement device (e.g., "Autopore III 9420" manufactured by MICROMERITICS) under different steps of incremental pressure applied to the supported ruthenium oxide catalyst.

A method for producing the package according to the present embodiment allows the water content in the catalyst for halogen production in the package to be reliably held within the above predetermined range, and thereby preventing water from leaking out from the catalyst for halogen production while efficiently inhibiting water from causing corrosion at contact portions between the catalyst for halogen production and the metal container in particular.

2. Halogen production method

A method for producing halogens according to the present embodiment can refer to a production method in which hydrogen chloride is oxidized with oxygen in the presence of the catalyst for halogen production according to the present embodiment produced as mentioned above, that is, the supported ruthenium oxide catalyst. The halogen production method enables halogens to be efficiently produced.

Examples of halogens produced by the halogen production method according to the present embodiment may include chlorine, bromine, and iodine, and chlorine is preferred.

Examples of reaction systems in the halogen production method may include fluidized bed, fixed bed, and moving bed reaction systems. As the reaction system, a fixed-bed system is preferred. It is preferred to use a fixed-bed reactor in the fixed-bed system of an adiabatic system or a heat-exchange fixed-bed system.

For use of the fixed-bed reactor of the adiabatic system, it is possible to use both a single-tube fixed-bed reactor and a multi-tube fixed-bed reactor, and the single-tube fixed-bed reactor is preferred.

For use of the fixed-bed reactor of the heat exchange system, it is possible to use both the single-tube fixed-bed reactor and the multi-tube fixed-bed reactor, and the single-tube fixed-bed reactor is preferred.

The oxidation reaction in the halogen production method according to the present embodiment is an equilibrium reaction. The reaction temperature in the halogen production method according to the present embodiment is typically 100 to 500°C, and preferably 200 to 450°C. The reaction temperature is preferably a relatively low temperature within the above temperature range because a high reaction temperature may lower the equilibrium conversion ratio.

The reaction pressure in the halogen production method according to the present embodiment is typically approximately 0.1 to 5 MPa.

Air or pure oxygen may be used as the oxygen source applicable to the halogen production method according to the present embodiment. The theoretical molar amount of oxygen to hydrogen halide is 1/4 mole, and typically 0.1 to 10-fold of this theoretical amount of oxygen is used.

The supply rate of hydrogen halide in the halogen production method according to the present embodiment can be typically approximately 10 to 20000 $h^{-1}$ in terms of the gas supply rate (L/h; 0°C, 0.1 MPa equivalent) per liter of the catalyst, namely GHSV.

The catalyst for halogen production according to the present embodiment preferably has a halogen concentration of 0.5% or less by mass from the viewpoint of enhancement of activity as a catalyst, and preferably has a halogen concentration of 0.01% or more by mass from the viewpoint of productivity, with respect to the total mass of the catalyst for halogen production being 100% by mass. The halogen concentration in the catalyst for halogen production is preferably in a range of 0.01% to 0.4% by mass, and more preferably in a range of 0.01% to 0.3% by mass.

The halogen concentration in the catalyst for halogen production according to the present embodiment can be measured by a well-known conventional method. The halogen concentration can be measured by ion chromatography method, for example. As well, the halogen concentration can be determined by soaking the catalyst for halogen production in a potassium iodide solution and then analyzing the potassium iodide solution by a neutralization titration method and an iodine titration method, for example.

3. Package and method for producing the package (1) Package

A package according to the present embodiment is a package encapsulating therein the catalyst for halogen production that is used for oxidizing hydrogen halides with oxygen to produce halogens. The catalyst for halogen production comprises 4% or less by volume of water content with respect to the pore volume of the catalyst for halogen production.

As already described, the catalyst for halogen production to be encapsulated in the package according to the present embodiment is preferably the supported ruthenium oxide catalyst with ruthenium oxide supported on the carrier, more specifically, preferably the supported ruthenium oxide catalyst supported on the titania carrier.

The catalyst for halogen production according to the present embodiment described above comprises 4% or less by volume of water content with respect to the pore volume of the catalyst for halogen production while encapsulated in the package. The volume of water contained in the catalyst for halogen production is preferably 2.5% or less, and more preferably 2.0% or less, with respect to the pore volume of the catalyst for halogen production.

Here, the water content (wt%) that is the volume of water contained in the catalyst for halogen production according to the present embodiment can be calculated by the following formula from a weight (g) that is obtained after the calcination step or before and after the drying treatment subsequent to the calcination step, a weight loss that is a weight difference obtained before and after the calcination step or the drying treatment, and a weight obtained after the treatment.

$$\texttt{Water content (wt\%) = 100 x weight loss (g) / weight}$$
$$\texttt{after calcination step or drying treatment (g)}$$

Hereinafter, a specific embodiment of the package according to the present embodiment is described. The package according to the present embodiment is the package encapsulating therein the catalyst for halogen production, for example the supported ruthenium oxide catalyst described above. The package comprises the catalyst for halogen production and the encapsulation container while the catalyst for halogen production is encapsulated in the encapsulation container.

The encapsulation container according to the present embodiment is a container capable of encapsulating therein the catalyst for halogen production described above.

A material of the encapsulation container is not particularly limited, provided that it maintains 4% or less by volume of water contained in the catalyst for halogen production with respect to the pore volume of the catalyst for halogen production.

In other words, the encapsulation container is preferably formed of a material with gas tightness and moisture-proof property, and more preferably made of a flexible material.

From the viewpoint of fulfilling the above requirement, the encapsulation container according to the present embodiment is preferably made of a material having a moisture permeability at 25°C of 1.0 g/m$^2$·24h or less. The moisture permeability can be measured by a measurement method in accordance with JIS Z0208.

Examples of the material of the encapsulation container may include low-density polyethylene (LDPE), metal laminate films such as aluminum laminate film and the like, liquid crystal polymer (LCP) film, and metal (film). The low-density polyethylene is preferred as the material of the encapsulation container from the viewpoint of productivity.

The shape of the encapsulation container is not particularly limited, provided that the encapsulation container holds 4% or less by volume of water contained in the catalyst for halogen production with respect to the pore volume of the catalyst for halogen production while encapsulating therein the catalyst for halogen production. The shape of the encapsulation container is preferably pouchlike.

More specifically, as described above, the encapsulation container is preferably made of the low-density polyethylene with pouchlike shape. The capacity (size) of the package container can be any suitable capacity (size) determined by taking into consideration the properties of the catalyst for halogen production to be encapsulated and the encapsulation amount.

For use of such a particularly flexible pouchlike member (or sheet-shaped member), a plurality of pouchlike members are combined with each other to form the encapsulation container.

The encapsulation container according to the present embodiment may be further provided with an encapsulation member such as a string member, tape member, seal member, or lid member for encapsulating the catalyst for halogen production and then sealing.

The package according to the present embodiment can efficiently inhibit moisture absorption of the catalyst for halogen production in the package, water leakage out from the catalyst, and especially corrosion of the metal container.

(2) Method for producing package

A method for producing the package according to the present embodiment is a method for producing the package in which the catalyst for halogen production is encapsulated. The method comprises a step of preparing the catalyst for halogen production and the encapsulation container, and a step of feeding the inert gas with a temperature of 50°C or less inside the encapsulation container and encapsulating the catalyst in the encapsulation container such that the catalyst for halogen production comprises 4% or less by volume of water with respect to the pore volume of the catalyst for halogen production, in order to produce the package. A specific description is given as follows.

<Step of preparing catalyst for halogen production and encapsulation container>

This step is to prepare the catalyst for halogen production described above and the encapsulation container having the configuration described above for the production of package.

It is to prepare an appropriate number of the encapsulation container(s) with any suitable embodiment (shape and size) as required by taking into consideration the properties (shape, size, and weight) of the catalyst for halogen production to be encapsulated and the encapsulated amount (weight).

It is preferred to match the capacity of the encapsulation container, i.e., the amount of the catalyst for halogen production encapsulated in the encapsulation container, with the amount of the catalyst for halogen production that is filled into the reactor in the halogen production step, for example. In this way, the halogen production step can be carried out more efficiently, without need to reweigh the catalyst for halogen production taken away from the package, in the halogen production step.

<Step of feeding inert gas with temperature of 50°C or less inside encapsulation container and encapsulating catalyst in encapsulation container such that catalyst for halogen production comprises 4% or less by volume of water with respect to pore volume of catalyst for halogen production>

First, this step is initiated by weighing a predetermined amount of the catalyst for halogen production and filling the prepared encapsulation container at its interior with the catalyst.

Next, the encapsulation container is sealed for encapsulating the catalyst for halogen production in the encapsulation container. In the present embodiment, the encapsulation container is sealed while the inert gas with a temperature of 50°C or less is fed inside the encapsulation container such that the catalyst for halogen production comprises 4% or less by volume of water with respect to the pore volume of the catalyst for halogen production.

A method for feeding the inert gas is not particularly limited. As the method for feeding the inert gas, any suitable well-known conventional method can be selected by taking into consideration the material, capacity, and shape of the selected encapsulation container as well as the properties of the selected catalyst for halogen production. Examples of the method for feeding the inert gas may include: using a nozzle or the like to introduce the inert gas directly into the interior of the encapsulation container; and partitioning an entire apparatus used for filling the encapsulation container with the catalyst for halogen production with use of a partition wall, and then feeding the inert gas within the partitioned space.

Examples of the inert gas usable at this step may include air, nitrogen gas, helium gas, argon gas, and carbon dioxide gas. Air is preferred as the inert gas from the viewpoint of productivity.

At this step, the temperature of the fed inert gas is set to 50°C or less. The temperature of the fed inert gas is preferably set to 40°C or less from the viewpoint of reducing the water concentration in the inert gas, and more preferably 30°C or less.

At this step, the encapsulation container can be sealed by any suitable method according to the material, size, and shape of the selected encapsulation container.

When a resin container such as the low-density polyethylene described above is used as the encapsulation container, for example, the sealing can be performed by heat sealing (thermocompression bonding) with the help of the properties of the material of the encapsulation container. The sealing by heat sealing allows the catalyst for halogen production to be easily and securely sealed in the encapsulation container. As well, the sealing can be performed with an adhesive, for example, or carried out with any suitable well-known conventional string member, tape member, seal member, lid member, or the like, as described above.

The package according to the present embodiment can be produced by the above steps.

(3) Another member capable of accommodating package

In storing or transporting the package according to the present embodiment produced as described above, another member can be used to accommodate therein the package for the purpose of protecting it from moisture, inevitable external stresses, and the like.

Examples of such a member may include a containment with a pouchlike member that is made of the same material as that of the encapsulation container described above and can accommodate therein one or two or more package(s).

Especially when the flexible pouchlike member is used as the containment, a plurality of the members can be overlapped with each other to form the containment similarly to the encapsulation container.

The sealing on the containment can be done in the same way as in the sealing on the encapsulation container by heat sealing or by using any suitable well-known conventional adhesive, string member, tape member, seal member, lid member, or the like, for example.

Examples of further members may include a holding container with greater strength to more effectively protect the package from externally applied stresses and shocks. Such a holding container can be used to accommodate one or two or more package(s) therein directly, or accommodate therein the containment in which one or two or more package(s) is/are accommodated.

Here, an embodiment of the holding container is described. The holding container is a container composed of a lid-like body and a main body, for example. The holding container is a container with a greater strength than those of the encapsulation container and the containment described above.

Examples of materials of the holding containers may include various metals and plastics. Specifically, as the holding containers, pail cans made of metal or plastic can be used, for example.

The capacity of the holding container is not particularly limited, provided that it can accommodate therein and hermetically seal a predetermined number of, such as one or two or more, the package(s) or the containment accommodating the package(s).

The lid-like body can be fixed to the main body by using an airtight tape or seal member to hermetically seal the interior, for example.

The holding container is preferably provided with an air cushioning member composed of flexible foam or the like on an interior surface of the lid-like body and an interior bottom surface of the main body, for example. In this way, the package can be more effectively protected from externally applied stresses and impacts.

[Examples]

<Preparation of catalyst for halogen production>

50 parts by weight of titanium dioxide ("STR-60R" manufactured by Sakai Chemical Industry Co., Ltd., 100% rutile type) was mixed with 100 parts by weight of $\alpha$-alumina ("AES-12" manufactured by Sumitomo Chemical Co., Ltd.), 13.2 parts by weight of titania sol ("CSB" manufactured by Sakai Chemical Industry Co., Ltd., 38% titania content by weight), and 2 parts by weight of methylcellulose ("METOLOSE 65SH-4000" manufactured by Shin-Etsu Chemical Co.,

Ltd.). Next, pure water was added and kneaded to obtain a kneaded product.

The kneaded product was extruded into a cylindrical shape with a diameter of 3.0 mmφ, and dried. The dried product was pulverized into forming body having a length of approximately 4 to 6 mm in a direction perpendicular to its diameter.

The resulting forming body was then calcinated at 800°C in air for 3 hours to obtain a carrier composed of a mixture of titanium dioxide and α-alumina.

Next, 20.0 g of this carrier was soaked in an aqueous solution that was obtained by dissolving 1.583 g of ruthenium chloride hydrate ($RuCl_3 \cdot nH_2O$, Ru content 40.0% by mass) in 3.5 g of pure water, and then left to stand for drying at 25°C for 15 hours to obtain a solid.

Next, a temperature was increased from room temperature to 250°C under air flow. Then, the resulting solid was further calcinated at 250°C for 2 hours to obtain a supported ruthenium oxide catalyst, as a catalyst for halogen production, with a 4% by weight support ratio of ruthenium oxide supported on the carrier.

Approximately 0.1 g of the resulting catalyst for halogen production was weighed. Then, the pulverized sample was mixed with 10 mL of ultrapure water and 1 mL of a 1 mmol/L sodium carbonate solution to obtain a mixture solution. The resulting mixture solution was used for extraction at 230°C for 16 hours. The resulting extract was filtered and then used as a test solution. $Cl^-$ in the test solution was measured by ion chromatography and converted to an eluted amount per unit mass of the sample. The converted halogen concentration in the catalyst for halogen production was 0.15 wt%.

<Production example of package of catalyst for halogen production>

A pouchlike member (0.1 mm thick) made of low-density polyethylene functioning as an encapsulation container was filled with 500 g of the catalyst for halogen production while 25°C dried air was fed through its interior. Then, the encapsulation container was sealed by heat sealing to close its opening.

In the same way, 40 packages each encapsulating therein the catalyst for halogen production were put altogether in the pouch (0.1 mm thick) to function as a containment. Then, the containment was sealed to close its opening with a tape-like member.

As described above, the containment accommodating therein 40 packages was accommodated in a metal holding container (18-liter square can with lid) with air cushion members placed above and below the containment. Then, main body of the holding container and the lid were sealed with the tape-like member to obtain a holding body with the accommodated packages of the catalyst for halogen production.

After storage of the packages (holding body) in this embodiment for 7 years at room temperature, the package was opened for measurement of the water content in the catalyst for halogen production. The water content was 0.43%. The ratio of water content to a pore volume of the catalyst was calculated according to a method described above, and then the ratio was 2.0%.

<Measurement of pore volume of supported ruthenium oxide catalysts>.

0.6 to 1.2 g of the resulting supported ruthenium oxide catalyst was weighed for measurement and dried in a dryer at 110°C for 4 hours. The sample was weighed for determination of its weight after dried. This sample was placed in a cell of a pore volume measurement device (e.g., "Autopore III 9420" manufactured by MICROMERITICS). After a pressure was set to 50 μmHg or less inside the cell, the cell was filled with mercury. Next, stepwise increased pressure was applied in the cell. A waiting time for equilibrating mercury intrusion was 10 seconds. A mercury intrusion amount was measured under different steps of the pressure. The mercury intrusion amount per gram of the sample was determined by dividing a total mercury intrusion amount (mL) obtained under the applied pressure increasing from 0.007 MPa to 207 MPa by the sample weight (g), and interpreted as the pore volume (mL/g). As a result, the pore volume (VP) of the supported ruthenium oxide catalyst in this Example was 0.22 mL/g.

<Measurement of water content in supported ruthenium oxide catalyst>.

Approximately 40 g of the above supported ruthenium oxide catalyst was weighed and dried at 110°C for 1 hour (h). The catalyst was weighed after dried. Then, the weights (g) obtained before and after drying and a weight loss (g), which is the difference between the weights before and after drying, were measured. The water content (wt%) was determined from the weight loss and the weight after drying, using the formula represented by the following formula.

$$\text{Water content (wt\%)} = 100 \times \text{weight loss (g)} / \text{weight after drying (g)}$$

<Ratio of water content to pore volume>.

The ratio of the water content to the pore volume was calculated by converting the water content (weight) (g/g) per unit weight of the supported ruthenium oxide catalyst into the water content (volume)(mL/g) per unit weight (mL/g), and then dividing by the pore volume. A water density of 1g /cm$^3$ at normal temperature and pressure was used for the conversion of water content (weight) (g/g) into the water content (volume) (mL/g).

[Example 1]

<Corrosion test for nickel (Ni) sample piece (measurement of pitting corrosion depth)>

The above supported ruthenium oxide catalyst was placed on an entire top surface of a nickel sample piece (25-mm square low carbon nickel plate, alloy number NW2201, JIS H4551) and left to stand under an air atmosphere in a thermohygrostat chamber at 25°C and 40% relative humidity for 672 hours.
The water content was measured as described above for the supported ruthenium oxide catalyst obtained after the standing treatment, and then the water content was 0.43 wt%. Moreover, the ratio of the water content to the pore volume of the supported ruthenium oxide catalyst was calculated as described above, and then the ratio was 2.0%.
The sample piece was washed with water to remove the supported ruthenium oxide catalyst, and the pitting corrosion depth of the nickel sample piece was measured by 3D measurement using a digital microscope (manufactured by Keyence Corporation, VHX-1000), and then the pitting corrosion depth was 22.00 $\mu$m.
Results are shown in Table 1 and FIG. 1.

[Example 2]

The corrosion test was conducted in the same way as in Example 1, except that the humidity in the above thermo thermohygrostat chamber was set to 50% relative humidity. After the standing treatment, the water content was measured for the supported ruthenium oxide catalyst, and determined to be 0.56 wt%. The ratio of the water content to the pore volume of the supported ruthenium oxide catalyst was 2.5%. Moreover, the pitting corrosion depth of the sample piece was 60.00 um.
Results are shown in Table 1 and FIG. 1.

[Example 3]

The corrosion test was conducted in the same way as in Example 1, except that the temperature was set to 40°C and the humidity was set to 70% relative humidity in the above thermohygrostat chamber. After the standing treatment, the water content was measured for the supported ruthenium oxide catalyst, and determined to be 0.86 wt%. The ratio of the water content to the pore volume of the supported ruthenium oxide catalyst was 3.9%. Moreover, the pitting corrosion depth of the sample piece was 109.00 um.
Results are shown in Table 1 and FIG. 1.

[Comparative Example 1]

The corrosion test was conducted in the same way as in Example 1, except that the temperature was set to 50°C and the humidity was set to 80% relative humidity in the thermohygrostat chamber. After the standing treatment, the water content was measured for the supported ruthenium oxide catalyst, and determined to be 1.03 wt%. The ratio of the water content to the pore volume of the supported ruthenium oxide catalyst was 4.7%. Moreover, the pitting corrosion depth of the sample piece was 364.50 um.
Results are shown in Table 1 and FIG. 1.

[Comparative Example 2]

The corrosion test was conducted in the same way as in Example 1, except that the temperature was set to 50°C and the humidity was set to 95% relative humidity in the thermohygrostat chamber. After the standing treatment, the water content was measured for the supported ruthenium oxide catalyst, and determined to be 1.39 wt%. The ratio of the water content to the pore volume of the supported ruthenium oxide catalyst was 6.3%. Moreover, the pitting corrosion depth of the sample piece was 416.2 um.
Results are shown in Table 1 and FIG. 1.

**EP 4 129 476 A1**

[Table 1]

|  | Temperature (°C) | Humidity (%RH) | Pitting corrosion depth (mm) | Pore volume (mL/g) | Ratio of water content to pore volume (%) |
|---|---|---|---|---|---|
| Example 1 | 25 | 40 | 22.0 | 0.22 | 2.0 |
| Example 2 | 25 | 50 | 60.0 | 0.22 | 2.5 |
| Example 3 | 40 | 70 | 109.0 | 0.22 | 3.9 |
| Comparative Example 1 | 50 | 80 | 364.5 | 0.22 | 4.7 |
| Comparative Example 2 | 50 | 95 | 416.2 | 0.22 | 6.3 |

**Claims**

1. A catalyst for halogen production for oxidizing a hydrogen halide with oxygen to produce a halogen, the catalyst for halogen production comprising 4% or less by volume of water with respect to a pore volume of the catalyst for halogen production while the catalyst is encapsulated in a package.

2. The catalyst for halogen production according to claim 1, wherein the catalyst for halogen production comprises a halogen at a concentration ranging from 0.01% by mass to 0.5% by mass with respect to a total mass of the catalyst for halogen production being 100% by mass.

3. The catalyst for halogen production according to claim 1 or 2, wherein the catalyst for halogen production is a supported ruthenium oxide catalyst with ruthenium oxide supported on a carrier.

4. A package encapsulating therein a catalyst for halogen production for oxidizing a hydrogen halide with oxygen to produce a halogen, wherein the catalyst for halogen production comprises 4% or less by volume of water with respect to a pore volume of the catalyst for halogen production.

5. The package according to claim 4, wherein the catalyst for halogen production comprises a halogen at a concentration ranging from 0.01% by mass to 0.5% by mass with respect to a total mass of the catalyst for halogen production being 100% by mass.

6. The package according to claim 4 or 5, wherein the catalyst for halogen production is a supported ruthenium oxide catalyst with ruthenium oxide supported on a carrier.

7. A method for producing a package encapsulating therein a catalyst for halogen production comprising:

    a step of preparing the catalyst for halogen production and an encapsulation container; and
    a step of feeding an inert gas with a temperature of 50°C or less inside the encapsulation container and encapsulating the catalyst in the encapsulation container such that the catalyst for halogen production comprises 4% or less by volume of water with respect to a pore volume of the catalyst for halogen production to produce the package.

# FIG.1

## INTERNATIONAL SEARCH REPORT

| International application No. |
| --- |
| PCT/JP2021/003004 |

| A. CLASSIFICATION OF SUBJECT MATTER |
| --- |
| B01J 33/00(2006.01)i; B01J 23/46(2006.01)i; C01B 7/04(2006.01)i |
| FI: B01J33/00 A; B01J23/46 301M; C01B7/04 A |

According to International Patent Classification (IPC) or to both national classification and IPC

| B. FIELDS SEARCHED |
| --- |

Minimum documentation searched (classification system followed by classification symbols)
B01J21/00-38/74; C01B7/00-7/24

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | JP 2013-169516 A (SUMITOMO CHEMICAL CO., LTD.) 02 September 2013 (2013-09-02) claims, examples 1-5, table 1 | 1–7 |
| A | WO 2009/147836 A1 (PANASONIC CORP.) 10 December 2009 (2009-12-10) claims 1, 2, paragraphs [0027]-[0029], examples 6-9 | 1–7 |
| A | JP 2006-289341 A (SUMITOMO CHEMICAL CO., LTD.) 26 October 2006 (2006-10-26) claim 3, paragraphs [0053]-[0054] | 1–7 |
| A | JP 8-72957 A (AKZO NOBEL N.V.) 19 March 1996 (1996-03-19) claims 1, 2 | 1–7 |

| ☐ Further documents are listed in the continuation of Box C. | ☒ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 02 April 2021 (02.04.2021) | 13 April 2021 (13.04.2021) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

International application No.

PCT/JP2021/003004

| Patent Documents referred in the Report | Publication Date | Patent Family | Publication Date |
|---|---|---|---|
| JP 2013-169516 A | 02 Sep. 2013 | CN 103285855 A | |
| WO 2009/147836 A1 | 10 Dec. 2009 | US 2012/0117919 A1 claims 1, 2, paragraphs [0038]-[0040], examples 6-9 JP 4558842 B2 CN 101778670 A | |
| JP 2006-289341 A | 26 Oct. 2006 | US 2009/0227807 A1 claim 3, paragraphs [0056]-[0057] WO 2006/098421 A1 EP 1862218 A1 KR 10-2007-0119682 A CN 101137438 A | |
| JP 8-72957 A | 19 Mar. 1996 | EP 691198 A1 claim 1 | |

Form PCT/ISA/210 (patent family annex) (January 2015)

**REFERENCES CITED IN THE DESCRIPTION**

**Patent documents cited in the description**

- JP 2013169516 A
- JP 3797147 B